# EUROPEAN PATENT APPLICATION

(11) **EP 4 322 475 A2**
(43) Date of publication of application: **14.02.2024**
(21) Application number: 23183756.8
(22) Date of filing: 06.07.2023
(51) Int. Cl.: H04L 9/40, H04L 65/403, H04L 12/18

(54) **END-TO-END ENCRYPTION FOR VIDEO CONFERENCE CALLS**

(30) Priority: 12.08.2022 US 202263397629 P; 21.12.2022 US 202218069911
(71) Applicant: Meta Platforms, Inc., Menlo Park, CA 94025 (US)
(72) Inventor: MILISIC, Matija, Menlo Park, 94025 (US); ALBRIGHT, Yan, Menlo Park, 94025 (US); PATIBANDLA, Siva Teja, Menlo Park, 94025 (US); SUNNY, NISHANT KUMAR, Menlo Park, 94025 (US); SADHWANI, SHYAM, Menlo Park, 94025 (US); GONZALEZ, JOSE M, Menlo Park, 94025 (US)
(74) Representative: Murgitroyd & Company

(57) **Abstract**

A method for encrypting data communication in a group video call is provided. The method includes receiving a media stream from a device with a first participant in a video conference call, the media stream including multiple data packets, for each data packet: identifying a prefix, indicative of a packet start, a metadata, and a user data that includes an encoded data for playing the media stream, forming an encrypted payload with the encoded data for each of the data packets according to a user key associated with the first participant in the video conference call, forming a source data packet consisting of one or more data packets, and generating a participant feed for the video conference call using a sequence of source data packets. A system, a memory storing instructions, and a processor for executing the instructions to cause the system to perform the above method, are also provided.

## Description

### BACKGROUND

### Field

The present disclosure is generally directed to ensuring secure video conference calls and protecting video privacy amongst participants thereof. More specifically, the present disclosure is directed to an end-to-end encryption mechanism for video conferencing calls where only the participants have security keys to access video feeds, insulating them from the server hosting the call.

### Related Art

Data encryption and privacy secure algorithms are evolving rapidly. However, many security enhanced schemes involve packet manipulations that tend to hinder metadata handling for hosts and devices that are typically kept outside of the encryption loop. This causes data handling hindrances (loss of synchronization, or even packet loss), and may even require modifications in packetization schemes (e.g., for video data) that work perfectly well, with unknown consequences in performance.

### SUMMARY

In accordance with a first aspect of the present disclosure, there is provided a computer-implemented method includes receiving a data stream from a media encoder in a client device with a first participant in a conference call, forming multiple data packets, each data packet including a prefix, indicative of a packet start, a metadata, and a user data that includes a portion of the data stream, applying a media encryption key to the user data to form an encrypted payload, forming source data packets by combining one or more data packets, where each data packet includes the prefix, the metadata and the encrypted payload, and providing, to a server hosting the conference call, a media stream including the source data packets.

In some embodiments, the computer-implemented method further comprises encoding a raw media data from a media capturing device coupled to the client device, and forming a data stream for transmission through a network.

In some embodiments, the computer-implemented method further comprises receiving, from a second participant in the conference call, a second media encryption key to decrypt a media payload from the second participant in a conference feed received from the server hosting the conference call.

In some embodiments, the computer-implemented method further comprises receiving a conference feed from the server hosting the conference call, the conference feed including multiple conference data packets, each conference data packet consisting of one or more data packets, each data packet having a prefix, a metadata, and a payload encrypted with a second media encryption key from a second client device with a second participant in the conference call.

In some embodiments, the computer-implemented method further comprises including an authentication tag for each media frame that includes one or more data packets, for tamper detection.

In some embodiments, in the above-mentioned computer-implemented method, providing the media stream to the server hosting the conference call comprises encrypting the media stream with an encryption key that is transparent to the server hosting the conference call.

In some embodiments, in the above-mentioned computer-implemented method, applying a media encryption key to the user data comprises parsing the encrypted payload to identify a matching portion with the prefix, and modifying the matching portion in the encrypted payload to avoid misidentification of the prefix.

In some embodiments, the computer-implemented method, further comprises transmitting the media encryption key to one or more participants in the conference call, wherein the media encryption key is transparent to the server hosting the conference call.

In some embodiments, the computer-implemented method further comprises:
receiving a group feed from a conference call server, the group feed including multiple conference data packets;
for each conference data packet identifying one or more data packets; and
for each data packet identifying the prefix, the metadata and the encrypted payload.

In some embodiments, the computer-implemented method further comprises decrypting an encrypted payload received from a group feed in a conference call based on a second media encryption key associate with a second participant in the conference call; and
playing a media stream including the group feed in a client device for the first participant.

In accordance with a second aspect of the present disclosure, there is provided a system includes a memory storing multiple instructions, and one or more processors configured to execute the instructions and cause the system to perform operations, the operations include: to receive a data stream from a media encoder in a client device with a first participant in a conference call, to form multiple data packets, each data packet including a prefix, indicative of a packet start, a metadata, and a user data that includes a portion of the data stream, to apply a media encryption key to the user data to form an encrypted payload, to form source data packets by combining one or more data packets, where each data packet includes the prefix, the metadata and the encrypted payload, and to provide, to a server hosting the conference call, a media stream including the source data packets.

In some embodiments, in the above-mentioned system, the one or more processors further execute instructions to encode a raw media data from a media capturing device coupled to the client device, and to form a data stream for transmission through a network.

In some embodiments, in the above-mentioned system, the one or more processors further execute instructions to receive, from each participant in the conference call, an encryption key to decrypt a conference feed including media data from each of other participants in the conference call.

In some embodiments, in the above-mentioned system, the one or more processors further execute instructions to receive, from a second participant in the conference call, a second media encryption key to decrypt a media payload from the second participant in a conference feed received from the server hosting the conference call.

In some embodiments, in the above-mentioned system, the one or more processors further execute instructions to receive a conference feed from the server hosting the conference call, the conference feed including multiple conference data packets, each conference data packet consisting of one or more data packets, each data packet having a prefix, a metadata, and a payload encrypted with a second media encryption key from a second client device with a second participant in the conference call.

In accordance with a third aspect of the present disclosure, there is provided a computer-implemented method includes generating, in a client device, a first encryption key for a first participant in a conference call, transmitting, via a remote server, the first encryption key to one or more participants in the conference call, receiving, from each participant in the conference call via the remote server, multiple encryption keys associated with each participant, and generating, in the client device, a second encryption key for the first participant when at least one of the one or more participants leaves the conference call.

In some embodiments, the computer-implemented method further comprises receiving, in the client device, a second encryption key associated with each participant in the conference call when at least one of the participants in the conference call leaves the conference call.

In some embodiments, the computer-implemented method further comprises ratcheting the first encryption key with a non-reversible hash operation when a second participant joins the conference call, and transmitting a ratcheted encryption key to the second participant.

In some embodiments, the computer-implemented method further comprises receiving, from each participant in the conference call, a ratcheted encryption key when a second participant joins the conference call.

In some embodiments, the computer-implemented method further comprises, with the first encryption key, providing a media encryption key to each participant in the conference call to decrypt a media stream from the client device.

In other embodiments, a non-transitory, computer-readable medium stores instructions which, when executed by one or more processors, cause a computer to perform a method. The method includes receiving a data stream from a media encoder in a client device with a first participant in a conference call, forming multiple data packets, each data packet including a prefix, indicative of a packet start, a metadata, and a user data that includes a portion of the data stream, applying a media encryption key to the user data to form an encrypted payload, forming source data packets by combining one or more data packets, where each data packet includes the prefix, the metadata and the encrypted payload, and providing, to a server hosting the conference call, a media stream including the source data packets.

In yet other embodiments, a system includes a first means to store instructions and a second means to execute the instructions to cause the system to perform a method. The method includes receiving a data stream from a media encoder in a client device with a first participant in a conference call, forming multiple data packets, each data packet including a prefix, indicative of a packet start, a metadata, and a user data that includes a portion of the data stream, applying a media encryption key to the user data to form an encrypted payload, forming source data packets by combining one or more data packets, where each data packet includes the prefix, the metadata, and the encrypted payload, and providing, to a server hosting the conference call, a media stream including the source data packets.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

FIG. 1 illustrates a network architecture configured for end-to-end encrypted communication in a video call application, according to some embodiments.
FIG. 2 is a block diagram illustrating details of devices and systems used in the network architecture of FIG. 1, according to some embodiments.
FIG. 3 is a block diagram illustrating details of devices and systems used in the network architecture of FIG. 1 and in the block diagram of FIG. 2, according to some embodiments.
FIGS. 4A-4B illustrate packetization schemes for data streams including video payloads in a videoconference call, according to some embodiments.
FIG. 5 illustrates an SFU server and client devices in a group call architecture configured for end-to-end encryption, according to some embodiments.
FIG. 6 illustrates an end-to-end encryption data flow that is insulated from an SFU server, according to some embodiments.
FIG. 7 illustrates a block diagram of a transmitter device and a receiver device in an end-to-end encryption scheme for a group video call, according to some embodiments.
FIG. 8 illustrates an encryption key transaction scheme between client devices in a video group call that is invisible for an SFU server, according to some embodiments.
FIGS. 9A-9B illustrate an encryption key transaction for a joiner device and a leaver device in an end-to-end encrypted video group call, according to some embodiments.
FIG. 10 is a flow chart illustrating steps in a method for encrypting video payloads in a group call, according to some embodiments.
FIG. 11 is a flow chart illustrating steps in a method for decrypting video payloads in a group call, according to some embodiments.
FIG. 12 is a flow chart illustrating steps in a method for transacting encrypted keys between client devices participating in a group call, according to some embodiments.
FIG. 13 is a block diagram illustrating an exemplary computer system with which headsets and other client devices, and the methods in FIGS. 10 and 11, can be implemented.
In the figures, elements having the same or similar reference numerals are related to the same or similar attributes or features, unless explicitly stated otherwise.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

### General Overview

To allow for user interaction in group calls through a network to be private and secure, an infrastructure for encrypted calling is desirable. Network calling services may include technology that supports end-to-end encryption. However, state-of-the-art architectures do the encryption over entire media frames. Therefore, the media server (e.g., a service forwarding unit -SFU-) may lose access to metadata useful for packet synchronization and multi-feed distribution to call participants. Similarly, receiving devices may lose visibility into media metadata such as video resolution which is used to reallocate decoders. In some approaches, packet metadata is extracted separately into a video header extension before encryption is done. However, support for such video header extension is not comprehensive. Additionally, such a strategy may involve changing the packetization logic from a codec-specific configuration to a codec-agnostic configuration, which may have unknown undesirable consequences.

To resolve the above technical problems, embodiments as disclosed herein include an end-to-end encryption mechanism for video conferencing calls where only the participants have security keys to access video feeds. The payload remains transparent to the server, while the server can still access the packet metadata to efficiently route the information. A key feature is that the encryption includes an authentication step that preserves the standard video packetization format, making this suitable for video communication and expediting a secure communication channel. In some embodiments, the encryption step includes mapping away certain codified schemes relevant in the standard packetization format, to preserve it. This allows to maintain video quality and limit the amount and scope of modifications to existing conference call infrastructure. In addition to the encryption step, some embodiments include selecting for encryption all but three types of metadata files in a given frame, to enhance security.

Some embodiments also include an encrypted key transaction scheme between devices of participants in a group call, wherein the server hosting the call is insulated from access to the encrypted keys. This guarantees that even when a host server becomes compromised, the data security and privacy of all call participants is safeguarded. Accordingly, a participant device in a conference call as disclosed herein include a native media encryption key to encrypt the media stream provided to a conference feed. The participant device also includes multiple media encryption keys to decrypt the media streams received from the other participant devices in the conference feed. The participant device may also include an asymmetric encryption key to exchange the media encryption keys with the other participant devices and ensure that the host server does not have access to these. In addition, the media encryption keys are changed whenever somebody joins or leaves the call. Each client changes their key and shares it with everyone else in the call.

### Example System Architecture

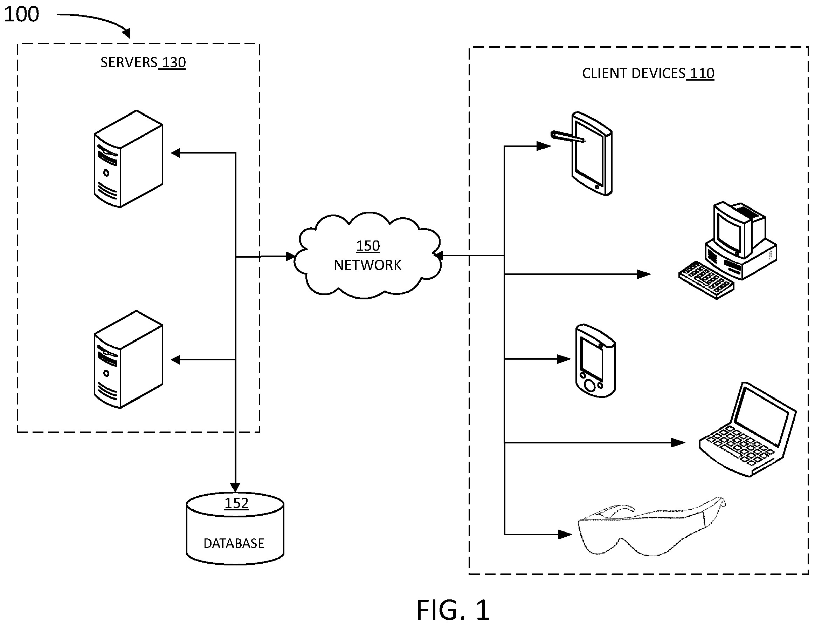

FIG. 1 illustrates a network architecture 100 configured for end-to-end encrypted communication in video call applications, according to some embodiments. Servers 130 and a database 152 are communicatively coupled with client devices 110 via a network 150. Servers 130 may host video call applications running in client devices 110. Client devices 110 may be used by participants in the video call conversations. Client devices 110 may include smart phones, laptops, mobile devices, palm devices, and even desktops. In some embodiments, client devices 110 may include virtual reality or augmented reality (VR/AR) headsets and/or smart glasses, and the video call conversation may include immersive reality elements. Network 150 can include, for example, any one or more of a local area network (LAN), a wide area network (WAN), the Internet, and the like. Further, network 150 can include, but is not limited to, any one or more of the following network topologies, including a bus network, a star network, a ring network, a mesh network, a star-bus network, tree or hierarchical network, and the like. Database 152 may store backup files from the video call conversations, including threads, messages, videos, and metadata. In addition, database 152 may include encrypted keys that may be distributed to each and all of the video call group participants.

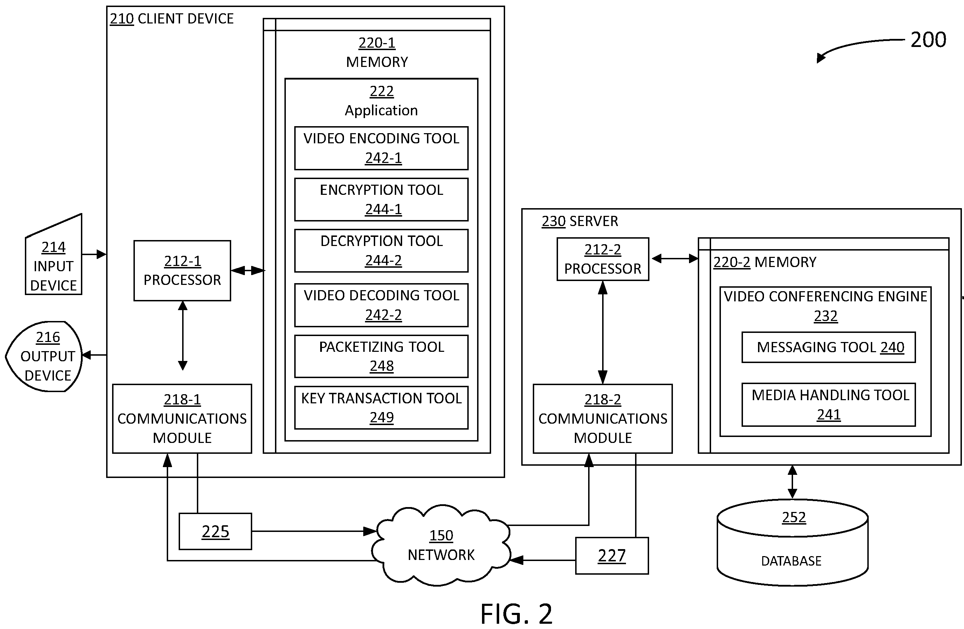

FIG. 2 is a block diagram 200 illustrating an example server 230, client device 210, and database 252 from architecture 100, according to some embodiments. Client device 210 and server 230 are communicatively coupled over network 150 via respective communications modules 218-1 and 218-2 (hereinafter, collectively referred to as "communications modules 218"). Communications modules 218 are configured to interface with network 150 to send and receive information, such as data, requests, responses, and commands to other devices via network 150. Communications modules 218 can be, for example, modems or Ethernet cards, and may include radio hardware and software for wireless communications (e.g., via electromagnetic radiation, such as radiofrequency -RF-, near field communications -NFC-, Wi-Fi, and Bluetooth radio technology). A user may interact with client device 210 via an input device 214 and an output device 216. Input device 214 may include a mouse, a keyboard, a pointer, a touchscreen, a microphone, a joystick, a virtual joystick, and the like. In some embodiments, input device 214 may include cameras, microphones, and sensors, such as touch sensors, acoustic sensors, inertial motion units -IMUs- and other sensors configured to provide input data to a VR/AR headset. For example, in some embodiments, input device 214 may include an eye tracking device to detect the position of a user's pupil in a VR/AR headset. Output device 216 may be a screen display, a touchscreen, a speaker, and the like.

Client device 210 may include a memory 220-1 and a processor 212-1. Memory 220-1 may include an application 222 (*e.g.,* a video call application), configured to run in client device 210 and couple with input device 214 and output device 216. Application 222 may be downloaded by the user from server 230 and may be hosted by server 230. In some embodiments, client device 210 is a VR/AR headset and application 222 is an immersive reality application. In some embodiments, client device 210 is a mobile phone used to collect a video or picture and upload to server 230 using a video or image collection application 222, to store in training database 252. In a video call application 222, communications module 218-1 transmits a participant's feed 225 to server 230 for inclusion in a group feed 227. Group feed 227 is transmitted via communications module 218-2 from server 230 to all participants in the video call. Accordingly, participant's feed 225 and group feed 227 may include one or more encrypted video payloads.

Video call application 222 may include a video encoding tool 242, an encryption tool 244-1, a decryption tool 244-2, a packetizing tool 248, and a key transaction tool 249. Video encoding tool 242 may be configured to transform raw video data into an encoded payload in participant's feed 225. Encryption tool 244-1 provides an encryption hash to encrypt a portion of the payload. Decryption tool 244-2 may be configured to decrypt video payloads from group feed 227 and display in output device 216. A decoding tool 242-2 decodes the video payload in group feed 227 into raw video that is then displayed in output device 216. Packetizing tool 248 is configured to split the frame into smaller parts and wraps them into RTP packets that will be provided to participant's feed 225. In some embodiments, packetizing tool 248 is also configured to combine the packets in group feed 227 and provide encrypted payloads to decryption tool 244-2 according to the metadata in the packet headers. Key transaction tool 249 is configured to interact with other client devices 210 and exchange encryption keys created by encryption tool 244-1 to provide payload encoding, as disclosed herein.

Server 230 includes a memory 220-2, a processor 212-2, and communications module 218-2. Hereinafter, processors 212-1 and 212-2, and memories 220-1 and 220-2, will be collectively referred to, respectively, as "processors 212" and "memories 220." Processors 212 are configured to execute instructions stored in memories 220. In some embodiments, memory 220-2 includes a video call engine 232 having a messaging tool 240 and a media handling tool 241 configured to receive participants' feed, synchronizing them, and preparing group feed 227. Video call engine 232 may share or provide group feed 227 to multiple participants in a video conference call, after synchronizing multiple participant's feeds 225. Participants in the video call may access video call engine 232 through application 222, installed in memory 220-1. Accordingly, application 222 may be installed by server 230 and perform scripts and other routines provided by server 230 through any one of multiple tools. Execution of application 222 may be controlled by processor 212-1. In some embodiments, video call engine 232, the tools contained therein, and at least part of training database 252 may be hosted in a different server that is accessible by server 230 or client device 210.

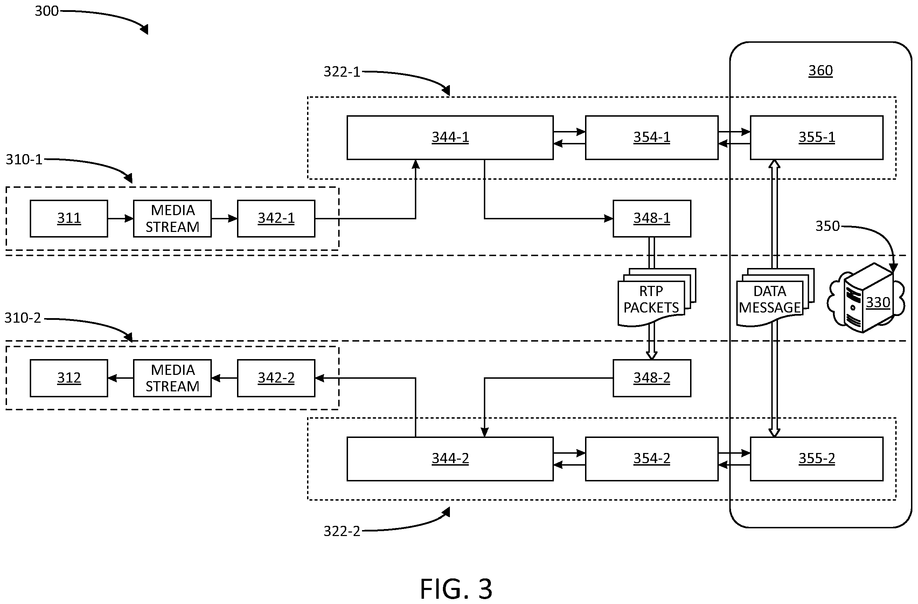

FIG. 3 is a block diagram 300 illustrating details of devices and systems used in the network architecture 100 and in block diagram 200, according to some embodiments. Client devices 310-1 and 310-2 (hereinafter, collectively referred to as "client devices 310") participate in a video conference call mediated by a server 330 through a network 350. Client device 310-1 is transmitting a media stream (*e.g*., a video) collected by a camera 311, and encoded by encoder 342-1. A video call application 322-1 installed in client device 310-1 applies a frame encryptor 344-1 (*cf.* encryption tool 244-1) and a packetizer 348-1 to send the media stream to client device 310-2. A video call application 322-2 receives the media stream in client device 310-2 with de-packetizer 348-2 to be decrypted with frame decryptor 344-2, decoded with decoder 342-2 and converted into a media stream that is displayed in media renderer 312. Video call applications 322-1 and 322-2 will be collectively referred to, hereinafter, as "video call applications 322." A key provider 354-1 generates an encryption key for client device 310-1. A key provider 354-2 generates the same for client device 310-2. Hereinafter, key providers 354-1 and 354-2 will be collectively referred to as "key providers 354." A key negotiation step 360 involves a key negotiator module 355-1 in client device 310-1 and a key negotiator module 355-2 in client device 310-2 (hereinafter, collectively referred to as "key negotiator modules 355").

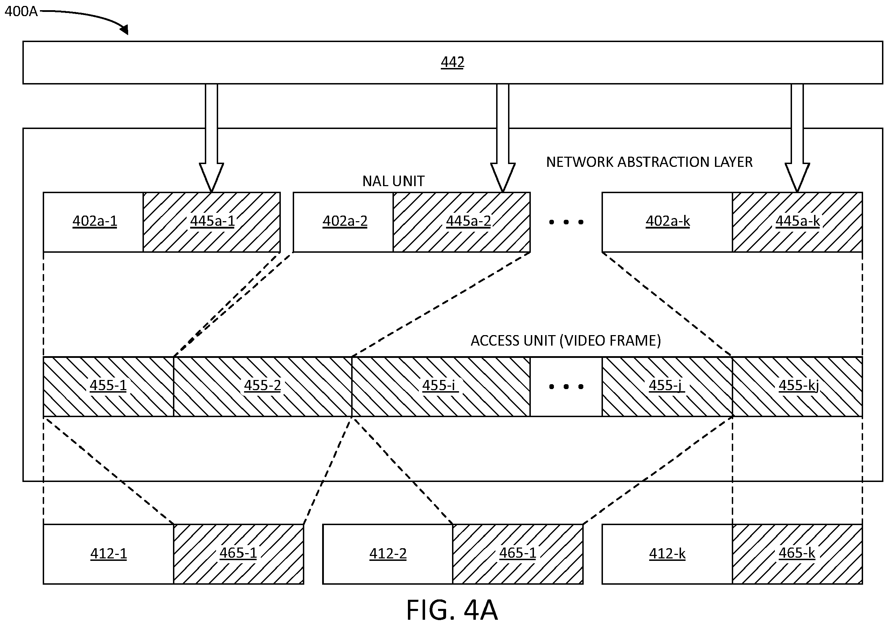

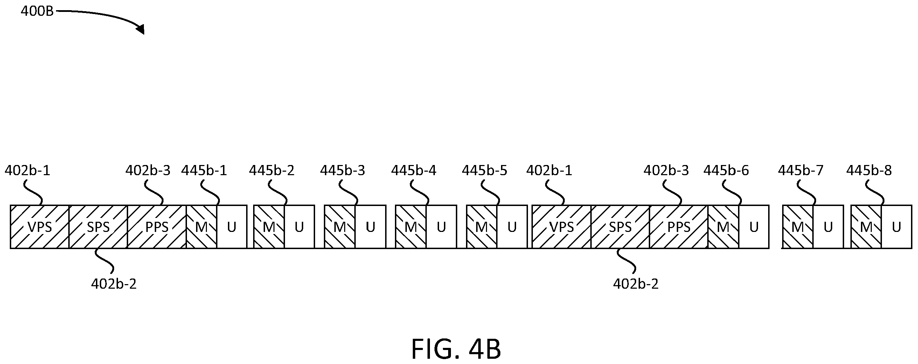

FIGS. 4A-4B illustrate packetization schemes 400A and 400B (hereinafter, collectively referred to as "packetization schemes 400") for data streams including video payloads in a videoconference call, according to some embodiments. Packetization schemes 400 may be performed by a client device running a video call application in a video conference call, as disclosed herein (*e.g.,* client devices 110 and 210, and video call applications 222 and 322).

Scheme 400A includes a video encoding layer 442 that provides encoded video frames from raw video data (*e.g.,* pixel information from an image, a soundtrack associated with the image, and the like). One video frame includes units 445a-1, 445a-2, and 445a-k (hereinafter, collectively referred to as "units 445a"). Units 445a represent network abstraction layer units (NALUs). For each unit 445a, there is a prefix 402a-1, 402a-2, and 402a-k (hereinafter, collectively referred to as "prefixes 402a"). Prefixes 402a mark the beginning of a new unit 445a. Units 445a include a metadata such as NALU type, timestamps and the like, which may be useful for a video call server to synchronize the media stream, and user-data which represents pixels in a video stream. In some embodiments, the user-data in 445a is encrypted via a hash function (*cf.* encryption tool 244-1) using a symmetric encryption key assigned to the client device. Prefixes 402a and units 445a are combined into network abstraction layer (NALU) packets 455-1, 455-2, 455-I, 455-j, and 455-k (hereinafter, collectively referred to as "NALU packets 455"). NALU packets 455 become the payload 465-1, 465-2, and 465-k (hereinafter, collectively referred to as "RTP payloads 465") in real-time protocol (RTP) packets, each associated with an RTP header 412-1, 412-2, and 412-k (hereinafter, collectively referred to as "RTP headers 412").

Accordingly, RTP payloads 465 may include encrypted video payloads and unencrypted metadata that a video call server may organize into a video call feed for all participants in a video call. In some embodiments, RTP payloads 465 may further include an authentication tag (*e.g.,* a checksum or some other error correction calculation) applied to encoded video frame consisting of NALU packets 455. The authentication tag may be used by a decryptor in a receiving device to ensure that the data has not been corrupted or tampered with by the server or any other malicious third party.

Scheme 400B illustrates a stream of packets including a video parameter set (VPS) 402b-1, a sequence parameter set (SPS) 402b-2, and a picture parameter set (PPS) 402b-3 (hereinafter, collectively referred to as "parameters 402b") that are left unencrypted. Parameters 402b may be followed by slices 445b-1, 445b-2, 445b-3, 445b-4, 445b-5, 445b-6, 445b-7, and 445b-8 (hereinafter, collectively referred to as "slices 445b"). Slices 445b include a metadata portion, M, and a user-data portion, U, containing the pixel information for the video. Accordingly, an encryption tool as disclosed herein leaves parameters 402b and metadata M of slices 445b untouched, while encrypting user-data U of slices 445b.

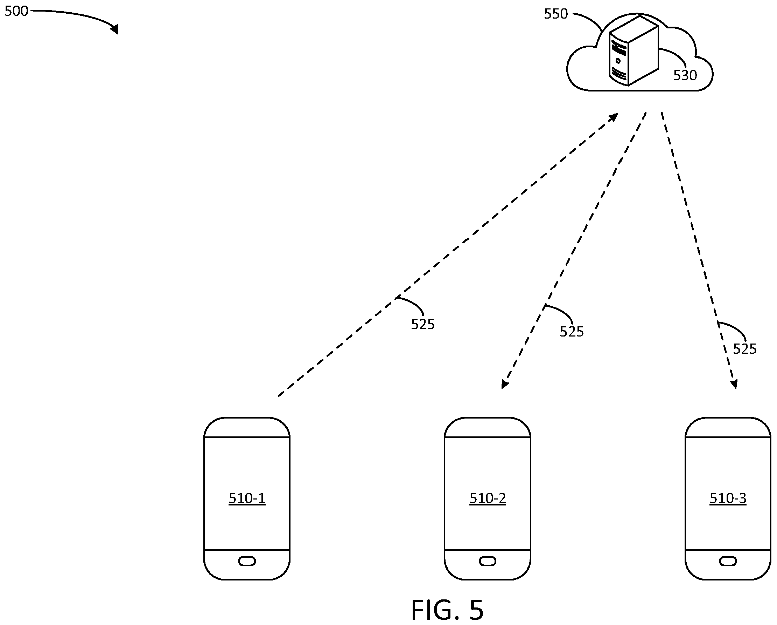

FIG. 5 illustrates a selective forwarding unit (SFU) server 530 in a group call architecture 500 configured for end-to-end encryption, according to some embodiments. SFU server 530 may be communicatively coupled to client devices 510-1, 510-2, and 510-3 (hereinafter, collectively referred to as "client devices 510") through network 550.

Client device 510-1 sends an encryption key 525 to SFU server 530 and SFU server transmits encryption key 525 to receiver devices 510-2 and 510-3 (hereinafter, collectively referred to as "receiver devices 510").

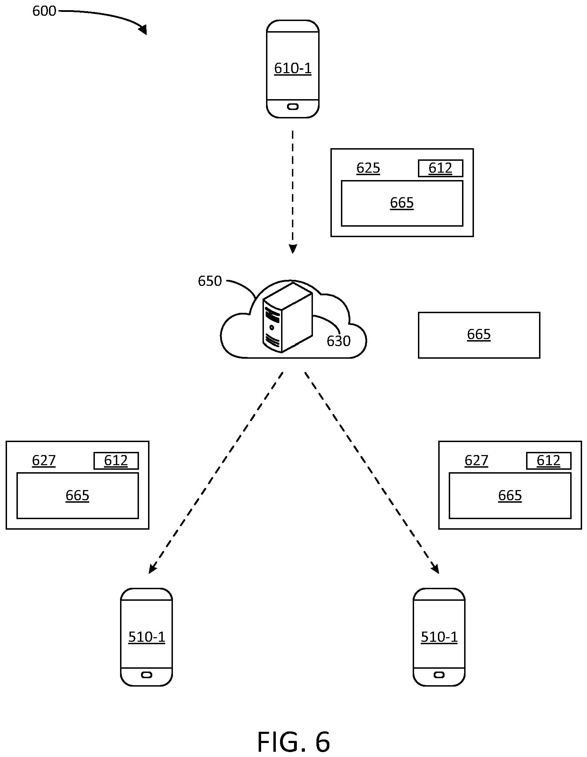

FIG. 6 illustrates an end-to-end encryption data flow 600 that is insulated from an SFU server 630, according to some embodiments. Data flow 600 includes a transmitter device 610t communicating a media stream 625 to receiver devices 610r-1 and 610r-2 (hereinafter, collectively referred to as "receiver devices 610r" and "client devices 610"), via a server 630 in a network 650. Media stream 625 includes an encrypted payload 665 associated with media streams (e.g., a video payload and the like) and an unencrypted header 612. Server 630 may not access encrypted payload 665, but it may redirect the media stream 627 to receiver devices 610r based on header 612. Receiver devices 610r, in turn, are able to decrypt payload 665 and play the media stream from transmitter device 610t.

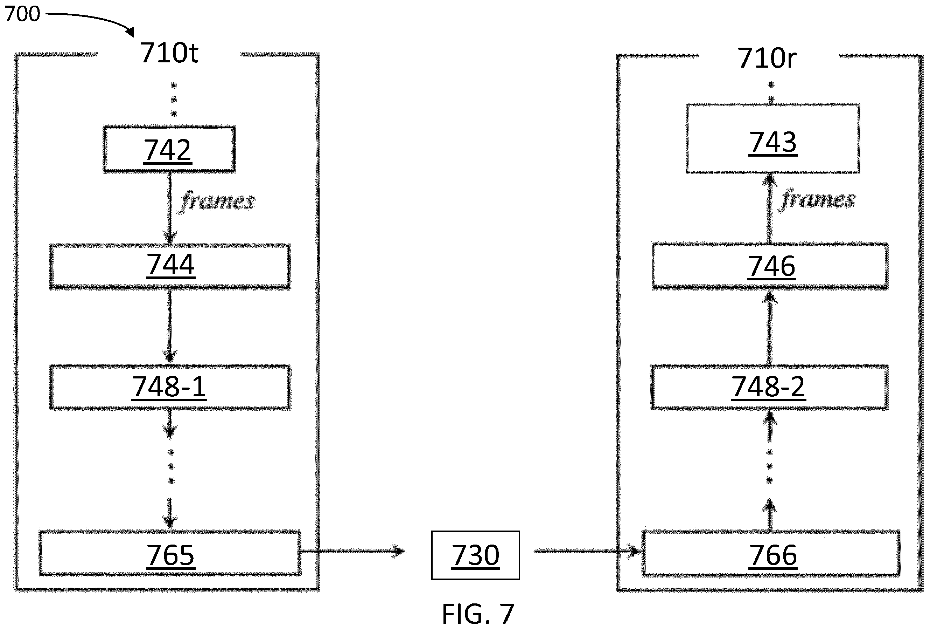

FIG. 7 illustrates a block diagram 700 of a transmitter device 710t and a receiver device 710r in an end-to-end encryption scheme for a group video call, according to some embodiments. An encoder 742 encodes the media frames, which are encrypted by encryptor 744 and then packetized by packetizer 748-1. A packet 765 may further include an authentication tag added to the media frame by encryptor 744, before it is passed to packetizer 748-1 in transmitter device 710t. Receiver device 710r verifies the authentication tag by decryption tool 746 to ensure that the data has not been tampered with by server 730 or any malicious interceptor in the network. A packetizer tool 748-2 de-packetizes the media stream, and a decryption tool 746 decrypts the media payload which is processed by decoder 743 for playing in receiving device 710r.

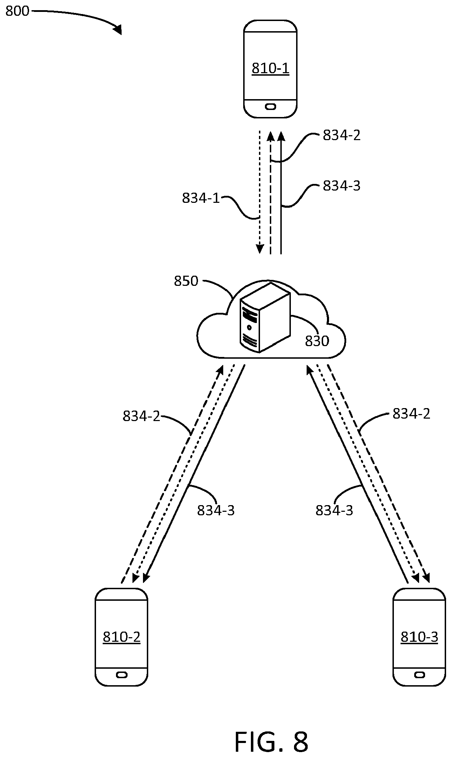

FIG. 8 illustrates an encrypted key transaction scheme 800 between client devices 810-1, 810-2, and 810-3 (hereinafter, collectively referred to as "client devices 810") in a video group call that is invisible for an SFU server 830, according to some embodiments.

Client device 810-1 generates a symmetric encryption key 834-1 that is transmitted to client devices 810-2 and 810-3 in a private manner (*e.g*., SFU server 830 is not able to decrypt it). Likewise, client device 810-2 generates a symmetric encryption key 834-2, transmitted to client devices 810-1 and 810-3 through SFU server 830 (which cannot decrypt it). And client device 810-3 generates a symmetric encryption key 834-3 that is transmitted to client devices 810-1 and 810-2 through SFU server 830 (which cannot decrypt it). Hereinafter, symmetric encryption keys 834-1, 834-2, and 834-3 will be collectively referred to as "encryption keys 834." The encryption keys encrypt and decrypt media payloads from each of client devices 810, and are unknowable to SFU server 830. This guarantees that the encrypted payloads are transparent to SFU server 830, as SFU server 830 in network 850 does not have the encryption keys that may decrypt the encryption.

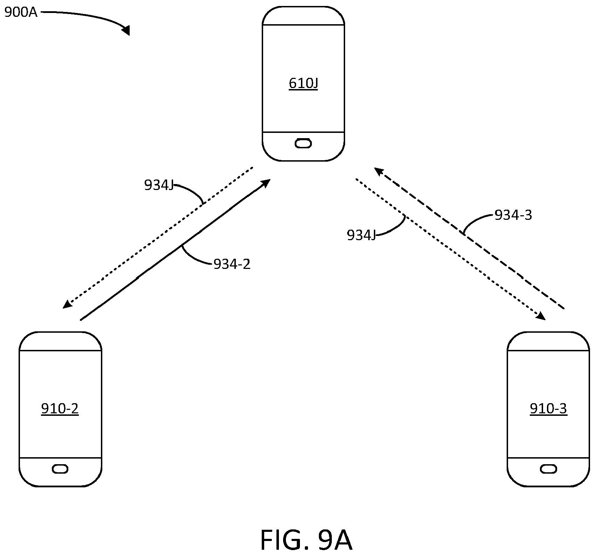

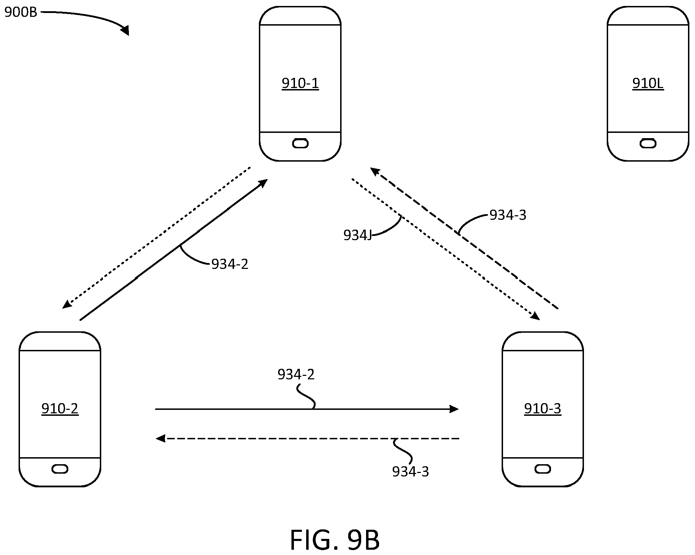

FIGS. 9A-9B illustrate encrypted key transactions 900A and 900B (hereinafter, collectively referred to as "transactions 900") for a joiner device 910J and a leaver device 910L in an end-to-end encrypted video group call, according to some embodiments. The group call also includes client devices 910-1, 910-2 and 910-3, which may be collectively referred to as "permanent devices 910p," and all devices 910J, 910L, and 910p will be collectively referred to as "client devices 910."

In transaction 900A, when device 910J joins the group call, it transmits an encryption key 934J to permanent devices 910p. In turn, each of permanent devices transmits a ratcheted encryption key 934-2 and 934-3 to device 910J, which includes a non-reversible hash operation, so that their prior keys cannot be derived from the current key. Accordingly, device 910J will only receive ratcheted encryption keys 934-2 and 934-3, and will not be able to figure out keys that were used in the call before it joined. Accordingly, device 910J cannot decrypt the media from before joining the call (even if they somehow had access to it). This is a safety mechanism to protect the privacy and data of all participants in the call.

In transaction 900B, all client devices 910 (except leaver device 910L) generate a brand new keys 934-1, 934-2, and 934-3 (hereinafter, collectively referred to as "new keys 934") for themselves, and exchange with one another. In this manner, the leaver device 910L loses the ability to decrypt and access media payloads from the group conversation, and all other devices 910 may continue in the group conversation with the same level of privacy and security as before.

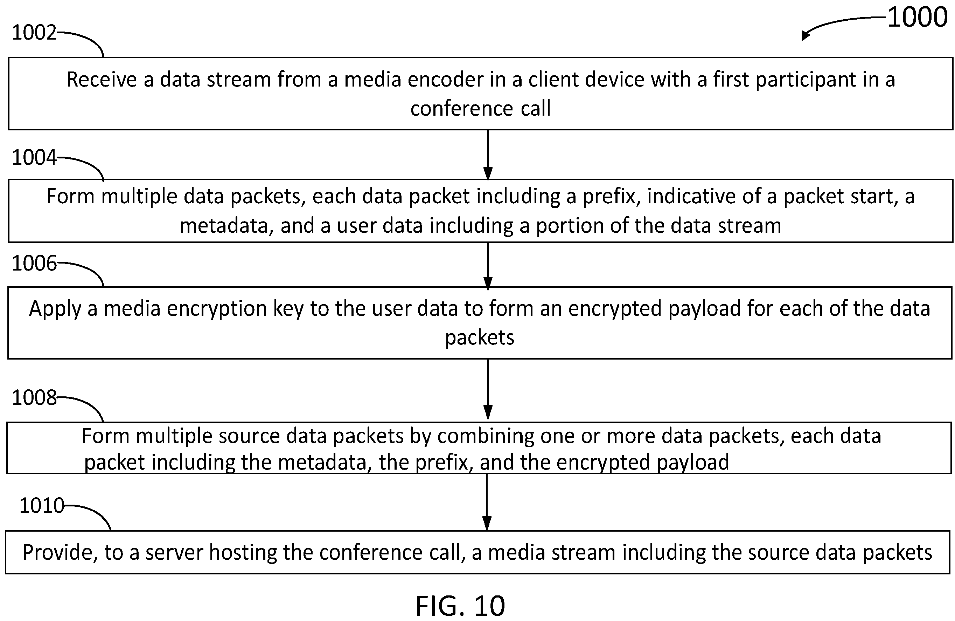

FIG. 10 is a flow chart illustrating steps in a method 1000 for encrypting video payloads in a group call, according to some embodiments. In some embodiments, at least one or more steps in method 1000 may be performed by one or more processors executing instructions stored in a memory may cause a client device, a server, or a database, communicatively coupled through a network via communications modules (*cf.* processors 212, memories 220, client devices 110 and 210, servers 130 and 230, databases 152 and 252, network 150, and communications modules 218) to perform at least one of the steps in method 1000, as disclosed herein. The instructions may include a video conference call application having a video encoding tool, an encryption tool, a decryption tool, a packetizing tool, and a key transaction tool, and a video call engine having a messaging tool and a media handling tool, as disclosed herein (*cf.* application 222, video encoding tool 242, encryption tool 244-1, decryption tool 244-2, packetizing tool 248, key transaction tool 249, messaging tool 240, and media handling tool 241). In some embodiments, methods consistent with the present disclosure may include at least one or more of the steps in method 1000 performed in a different order, simultaneously, quasi-simultaneously, or overlapping in time.

Step 1002 includes receiving a data stream from a media encoder in a client device with a first participant in a conference call. In some embodiments, step 1002 includes encoding a raw media data from a media capturing device coupled to the client device, and forming a data stream for transmission through a network.

Step 1004 includes forming multiple data packets, each data packet including a prefix, indicative of a packet start, a metadata and a user data that includes a portion of the data stream.

Step 1006 includes applying a media encryption key to the user data to form an encrypted payload, for each of the data packets. In some embodiments, step 1006 includes adding an authentication tag for each media frame which consists of one or more data packets, for tamper detection. In some embodiments, step 1006 includes parsing the encrypted payload to identify a matching portion with the prefix, and modifying the matching portion in the encrypted payload to avoid misidentification of the prefix.

Step 1008 includes forming a source data packet by combining one or more data packets, where each data packet consists of the prefix, the metadata, and the encrypted payload.

Step 1010 includes providing, to a server hosting the conference call, a media stream including the source data packets.

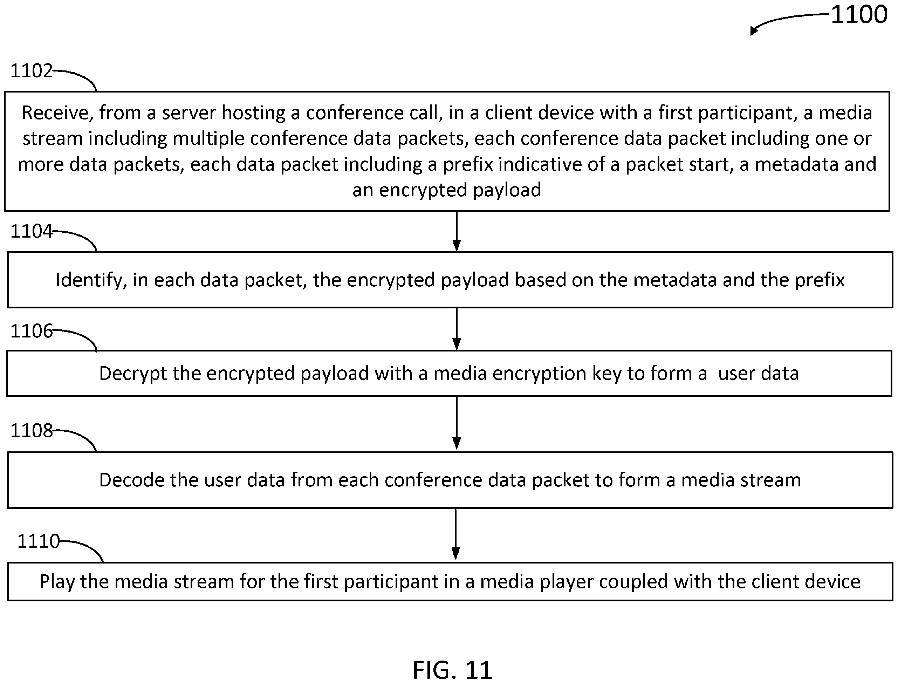

FIG. 11 is a flow chart illustrating steps in a method 1100 for decrypting video payloads in a group call, according to some embodiments. In some embodiments, at least one or more steps in method 1100 may be performed by one or more processors executing instructions stored in a memory may cause a client device, a server, or a database, communicatively coupled through a network via communications modules (*cf.* processors 212, memories 220, client devices 110 and 210, servers 130 and 230, databases 152 and 252, network 150, and communications modules 218) to perform at least one of the steps in method 1000, as disclosed herein. The instructions may include a video conference call application having a video encoding tool, an encryption tool, a decryption tool, a packetizing tool, and a key transaction tool, and a video call engine having a messaging tool and a media handling tool, as disclosed herein (*cf.* application 222, video encoding tool 242, encryption tool 244-1, decryption tool 244-2, packetizing tool 248, key transaction tool 249, messaging tool 240, and media handling tool 241). In some embodiments, methods consistent with the present disclosure may include at least one or more of the steps in method 1100 performed in a different order, simultaneously, quasi-simultaneously, or overlapping in time.

Step 1102 includes receiving, from a server hosting a conference call, in a client device with a first participant, a media stream including multiple conference data packets, each conference data packet consisting of one or more data packets, each data packet consisting of a prefix indicative of a packet start, a metadata and an encrypted payload.

Step 1104 includes identifying, in each data packet, the encrypted payload based on the metadata and the prefix.

Step 1106 includes decrypting the encrypted payload with a media encryption key to form a user data.

Step 1108 includes decoding the user data from each data packet to form a media stream.

Step 1110 includes playing the media stream for the first participant in a media player coupled with the client device.

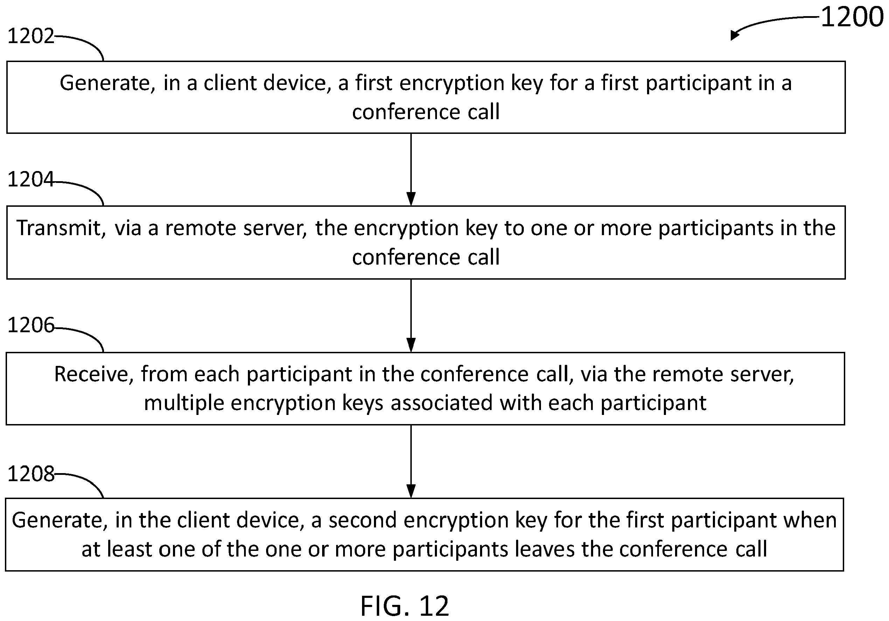

FIG. 12 is a flow chart illustrating steps in a method 1200 for transacting encrypted keys between client devices participating in a group call, according to some embodiments. In some embodiments, one or more processors executing instructions stored in a memory may cause a client device, a server, or a database, communicatively coupled through a network via communications modules (*cf.* processors 212, memories 220, client devices 110 and 210, servers 130 and 230, databases 152 and 252, network 150, and communications modules 218) to perform at least one of the steps in method 1200, as disclosed herein. The instructions may include a video conference call application having a video encoding tool, an encryption tool, a decryption tool, a packetizing tool, and a key transaction tool, and a video call engine having a messaging tool and a media handling tool, as disclosed herein (*cf.* application 222, video encoding tool 242, encryption tool 244-1, decryption tool 244-2, packetizing tool 248, key transaction tool 249, messaging tool 240, and media handling tool 241). In some embodiments, methods consistent with the present disclosure may include at least one or more of the steps in method 1200 performed in a different order, simultaneously, quasi-simultaneously, or overlapping in time.

Step 1202 includes generating, in a client device, a first encryption key for a first participant in a conference call. In some embodiments, step 1202 includes receiving, in the client device, a second encryption key associated with each participant in the conference call when at least one of the participants in the conference call leaves the conference call.

Step 1204 includes transmitting, via a remote server, the first encryption key to one or more participants in the conference call.

Step 1206 includes receiving, from each participant in the conference call via the remote server, multiple encryption keys associated with each participant.

Step 1208 includes generating, in the client device, a second encryption key for the first participant when at least one of the participants leaves the conference call. In some embodiments, step 1208 includes ratcheting the first encryption key with a non-reversible hash operation when a second participant joins the conference call, and transmitting a ratcheted encryption key to the second participant. In some embodiments, step 1208 includes receiving, from each participant in the conference call, a ratcheted encryption key when a second participant joins the conference call.

### Hardware Overview

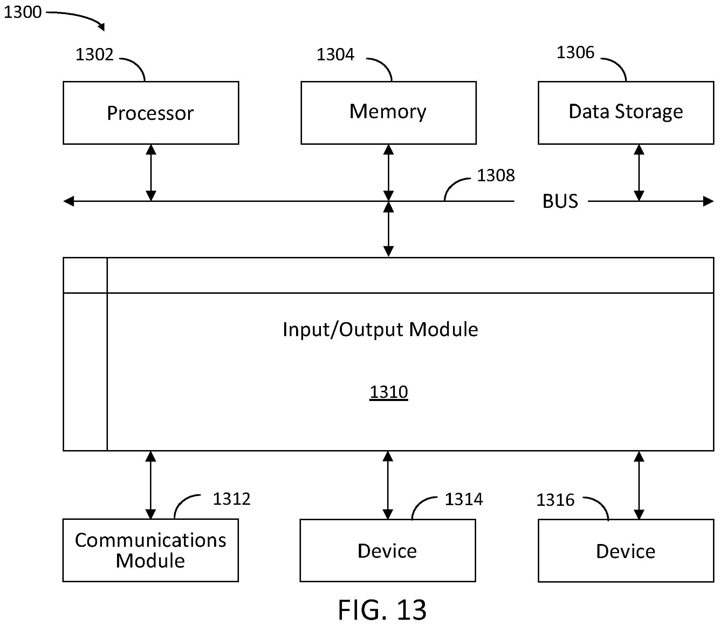

FIG. 13 is a block diagram illustrating an exemplary computer system 1300 with which headsets and other client devices 110, and methods 1000, 1100 and 1200 can be implemented, according to some embodiments. In certain aspects, computer system 1300 may be implemented using hardware or a combination of software and hardware, either in a dedicated server, or integrated into another entity, or distributed across multiple entities. Computer system 1300 may include a desktop computer, a laptop computer, a tablet, a phablet, a smartphone, a feature phone, a server computer, or otherwise. A server computer may be located remotely in a data center or be stored locally.

Computer system 1300 includes a bus 1308 or other communication mechanism for communicating information, and a processor 1302 (*e.g*., processors 212) coupled with bus 1308 for processing information. By way of example, the computer system 1300 may be implemented with one or more processors 1302. Processor 1302 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 1300 can include, in addition to hardware, code that creates an execution environment for the computer program in question, *e.g*., code that constitutes processor firmware, a protocol stack, a database management system, an operating system, or a combination of one or more of them stored in an included memory 1304 (*e.g*., memories 220), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled with bus 1308 for storing information and instructions to be executed by processor 1302. The processor 1302 and the memory 1304 can be supplemented by, or incorporated in, special purpose logic circuitry.

The instructions may be stored in the memory 1304 and implemented in one or more computer program products, *e.g*., one or more modules of computer program instructions encoded on a computer-readable medium for execution by, or to control the operation of, the computer system 1300, and according to any method well known to those of skill in the art, including, but not limited to, computer languages such as data-oriented languages (*e.g*., SQL, dBase), system languages (*e.g.,* C, Objective-C, C++, Assembly), architectural languages (*e.g.,* Java, .NET), and application languages (*e.g*., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, offside rule languages, procedural languages, reflective languages, rule-based languages, scripting languages, stack-based languages, synchronous languages, syntax handling languages, visual languages, wirth languages, and xml-based languages. Memory 1304 may also be used for storing temporary variable or other intermediate information during execution of instructions to be executed by processor 1302.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 1300 further includes a data storage device 1306 such as a magnetic disk or optical disk, coupled with bus 1308 for storing information and instructions. Computer system 1300 may be coupled via input/output module 1310 to various devices. Input/output module 1310 can be any input/output module. Exemplary input/output modules 1310 include data ports such as USB ports. The input/output module 1310 is configured to connect to a communications module 1312. Exemplary communications modules 1312 include networking interface cards, such as Ethernet cards and modems. In certain aspects, input/output module 1310 is configured to connect to a plurality of devices, such as an input device 1314 and/or an output device 1316. Exemplary input devices 1314 include a keyboard and a pointing device, *e.g.,* a mouse or a trackball, by which a consumer can provide input to the computer system 1300. Other kinds of input devices 1314 can be used to provide for interaction with a consumer as well, such as a tactile input device, visual input device, audio input device, or brain-computer interface device. For example, feedback provided to the consumer can be any form of sensory feedback, e.g., visual feedback, auditory feedback, or tactile feedback; and input from the consumer can be received in any form, including acoustic, speech, tactile, or brain wave input. Exemplary output devices 1316 include display devices, such as an LCD (liquid crystal display) monitor, for displaying information to the consumer.

According to one aspect of the present disclosure, headsets and client devices 110 can be implemented, at least partially, using a computer system 1300 in response to processor 1302 executing one or more sequences of one or more instructions contained in memory 1304. Such instructions may be read into memory 1304 from another machine-readable medium, such as data storage device 1306. Execution of the sequences of instructions contained in main memory 1304 causes processor 1302 to perform the process steps described herein. One or more processors in a multi-processing arrangement may also be employed to execute the sequences of instructions contained in memory 1304. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, *e.g*., a data server, or that includes a middleware component, *e.g.,* an application server, or that includes a front end component, *e.g.,* a client computer having a graphical consumer interface or a Web browser through which a consumer can interact with an implementation of the subject matter described in this specification, or any combination of one or more such back end, middleware, or front end components. The components of the system can be interconnected by any form or medium of digital data communication, *e.g*., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 1300 can include clients and servers. A client and server are generally remote from each other and typically interact through a communication network. The relationship of client and server arises by virtue of computer programs running on the respective computers and having a client-server relationship to each other. Computer system 1300 can be, for example, and without limitation, a desktop computer, laptop computer, or tablet computer. Computer system 1300 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 1302 for execution. Such a medium may take many forms, including, but not limited to, non-volatile media, volatile media, and transmission media. Non-volatile media include, for example, optical or magnetic disks, such as data storage device 1306. Volatile media include dynamic memory, such as memory 1304. Transmission media include coaxial cables, copper wire, and fiber optics, including the wires forming bus 1308. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*e.g.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, and other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are intended to be encompassed by the subject technology. Moreover, nothing disclosed herein is intended to be dedicated to the public, regardless of whether such disclosure is explicitly recited in the above description. No claim element is to be construed under the provisions of 35 U.S.C. §112, sixth paragraph, unless the element is expressly recited using the phrase "means for" or, in the case of a method claim, the element is recited using the phrase "step for."

While this specification contains many specifics, these should not be construed as limitations on the scope of what may be described, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially described as such, one or more features from a described combination can in some cases be excised from the combination, and the described combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, brief description of the drawings, abstract, and drawings are hereby incorporated into the disclosure and are provided as illustrative examples of the disclosure, not as restrictive descriptions. It is submitted with the understanding that they will not be used to limit the scope or meaning of the claims. In addition, in the detailed description, it can be seen that the description provides illustrative examples and the various features are grouped together in various implementations for the purpose of streamlining the disclosure. The method of disclosure is not to be interpreted as reflecting an intention that the described subject matter requires more features than are expressly recited in each claim. Rather, as the claims reflect, inventive subject matter lies in less than all features of a single disclosed configuration or operation. The claims are hereby incorporated into the detailed description, with each claim standing on its own as a separately described subject matter.

The claims are not intended to be limited to the aspects described herein, but are to be accorded the full scope consistent with the language claims and to encompass all legal equivalents. Notwithstanding, none of the claims are intended to embrace subject matter that fails to satisfy the requirements of the applicable patent law, nor should they be interpreted in such a way.

## Claims

1. A computer-implemented method, comprising:
receiving a data stream from a media encoder in a client device with a first participant in a conference call;
forming multiple data packets, each data packet including a prefix, indicative of a packet start, a metadata, and a user data that includes a portion of the data stream;
applying a media encryption key to the user data to form an encrypted payload, for each of the data packets;
forming a source data packet consisting of one or more data packets, each data packet including the prefix, the metadata, and the encrypted payload; and
providing, to a server hosting the conference call, a media stream including the source data packets.

2. The computer-implemented method of claim 1, further comprising encoding a raw media data from a media capturing device coupled to the client device, and forming a data stream for transmission through a network.

3. The computer-implemented method of claim 1 or 2, further comprising receiving, from a second participant in the conference call, a second media encryption key to decrypt a media payload from the second participant in a conference feed received from the server hosting the conference call.

4. The computer-implemented method of any preceding claim, further comprising receiving a conference feed from the server hosting the conference call, the conference feed including multiple conference data packets, each conference data packet consisting of one or more data packets, each data packet having a prefix, a metadata, and a payload encrypted with a second media encryption key from a second client device with a second participant in the conference call.

5. The computer-implemented method of any preceding claim, further comprising including an authentication tag for each media frame that includes one or more data packets, for tamper detection.

6. The computer-implemented method of any preceding claim, wherein providing the media stream to the server hosting the conference call comprises encrypting the media stream with an encryption key that is transparent to the server hosting the conference call, and/or preferably wherein applying a media encryption key to the user data comprises parsing the encrypted payload to identify a matching portion with the prefix, and modifying the matching portion in the encrypted payload to avoid misidentification of the prefix..

7. The computer-implemented method of any preceding claim, further comprising transmitting the media encryption key to one or more participants in the conference call, wherein the media encryption key is transparent to the server hosting the conference call, and/or preferably further comprising:
receiving a group feed from a conference call server, the group feed including multiple conference data packets;
for each conference data packet identifying one or more data packets; and
for each data packet identifying the prefix, the metadata and the encrypted payload.

8. The computer-implemented method of any preceding claim, further comprising decrypting an encrypted payload received from a group feed in a conference call based on a second media encryption key associate with a second participant in the conference call; and
playing a media stream including the group feed in a client device for the first participant.

9. A system, comprising:
a memory storing multiple instructions; and
one or more processors configured to execute the instructions and cause the system to perform operations, the operations comprising:
receive a data stream from a media encoder in a client device with a first participant in a conference call;
form multiple data packets, each data packet including a prefix, indicative of a packet start, a metadata, and a user data that includes a portion of the data stream;
apply a media encryption key to the user data to form an encrypted payload;
form source data packets, each source data packet consisting of one or more data packets, each data packet including the prefix, the metadata, and the encrypted payload; and
provide, to a server hosting the conference call, a media stream including the source data packets.

10. The system of claim 9, wherein the one or more processors further execute instructions to encode a raw media data from a media capturing device coupled to the client device, and to form a data stream for transmission through a network and/or preferably
wherein the one or more processors further execute instructions to receive, from each participant in the conference call, an encryption key to decrypt a conference feed including media data from each of other participants in the conference call; and/or preferably
wherein the one or more processors further execute instructions to receive, from a second participant in the conference call, a second media encryption key to decrypt a media payload from the second participant in a conference feed received from the server hosting the conference call; and/or preferably
wherein the one or more processors further execute instructions to receive a conference feed from the server hosting the conference call, the conference feed including multiple conference data packets, each conference data packet consisting of one or more data packets, each data packet having a prefix, a metadata, and a payload encrypted with a second media encryption key from a second client device with a second participant in the conference call.

11. The system of claim 9 or 10, wherein the one or more processors further execute instructions to receive a conference feed from the server hosting the conference call, the conference feed including multiple conference data packets, each conference data packet consisting of one or more data packets, each data packet having a prefix, a metadata, and a payload encrypted with a second media encryption key from a second client device with a second participant in the conference call.

12. A computer-implemented method, comprising:
generating, in a client device, a first encryption key for a first participant in a conference call;
transmitting, via a remote server, the first encryption key to one or more participants in the conference call;
receiving, from each participant in the conference call via the remote server, multiple encryption keys associated with each participant; and
generating, in the client device, a second encryption key for the first participant when at least one of the one or more participants leaves the conference call.

13. The computer-implemented method of claim 12, further comprising receiving, in the client device, a second encryption key associated with each participant in the conference call when at least one of the participants in the conference call leaves the conference call.

14. The computer-implemented method of claim 12 or 13, further comprising ratcheting the first encryption key with a non-reversible hash operation when a second participant joins the conference call, and transmitting a ratcheted encryption key to the second participant.

15. The computer-implemented method of any of claims 12 to 14, further comprising receiving, from each participant in the conference call, a ratcheted encryption key when a second participant joins the conference call; and/or preferably further comprising, with the first encryption key, providing a media encryption key to each participant in the conference call to decrypt a media stream from the client device..
